Europäisches Patentamt

European Patent Office

Office européen des brevets

(11) Veröffentlichungsnummer: **0 048 524**

**A1**

(12) **EUROPÄISCHE PATENTANMELDUNG**

(21) Anmeldenummer: **81201046.0**

(22) Anmeldetag: **18.09.81**

(51) Int. Cl.³: **B 65 G 21/20**

(30) Priorität: **19.09.80 DE 3035371**

(43) Veröffentlichungstag der Anmeldung:
**31.03.82 Patentblatt 82/13**

(84) Benannte Vertragsstaaten:
**AT BE CH FR GB IT LI LU NL SE**

(71) Anmelder: **GEFRA B.V.**
**Einsteinstraat 1**
**NL-2690 AA 's-Gravenzande(NL)**

(72) Erfinder: **Sijbrandij, George**
**Monsterseweg 134**
**NL-2685 LM Poeldijk(NL)**

(74) Vertreter: **De Wit, Gerard Frederik, Ir. et al,**
**Octrooi- en Merkenbureau De Wit B.V. Breitnerlaan 146**
**NL-2596 HG Den Haag(NL)**

(54) **Stütze für die Seitenführung einer Fördereinrichtung.**

(57) Stütze für eine Seitenführung (20, 20') einer Fördereinrichtung (1) mit einem in seiner Längsrichtung verschiebbaren und festsetzbaren mit der Seitenführung zu verbindenden Tragbolzen (12), welche Stütze eine festsetzbare Drehverbindung (8) hat, die eine horizontale Richtungsanpassung
des Tragbolzens (12) erlaubt. Vorzugsweise ist noch eine
weitere um eine vertikale Achse drehbare Verbindung (24)
zwischen den Tragbolzen (12) und die Seitenführung (20, 20')
angeordnet.

FIG.1

EP 0 048 524 A1

0048524

## Stütze für die Seitenführung einer Fördereinrichtung.

Die Erfindung bezieht sich auf eine insbesondere für Flaschen oder dergleiche geeignete Fördereinrichtung, bei der die zu fördernden Gegenstände auf einer etwa waagerecht bewegten Förderfläche aufsitzen und Seitenführungen die Gegenstände auf diese Fläche halten. In Kurven dieser Seitenführungen, die z.B. notwendig sind, um die Gegenstände von der bewegten Fläche zur Seite zu schieben oder aber auf eine neben der bewegten Fläche angeordnete zweite Förderfläche zu bringen, bestand bisher die Schwierigkeit, die Seitenführungen mit einfachen Mitteln derart zu stützen, dass eine geschmeidige Kurve und demzufolge eine staufreie Förderung der Gegenstände erreicht wird.

Die Erfindung bezweckt, dieses Problem zu lösen und dabei eine Stütze für die Seitenführungen zu schaffen, die leicht einstellbar ist, um sich jeder Kurve anzupassen. Dadurch wird die Flexibilität der Fördereinrichtung für verschiedenartige Gegenstände ganz wesentlich verbessert oder aber auch ein anderer Einsatz der Fördereinrichtung erheblich erleichtert, ohne dass etwa besondere, der Form oder Lage der Kurve angepasste Stützen notwendig sind, wobei dann auch Spezialpersonal für eine Umschaltung nicht mehr notwendig ist.

Bekannte Stützen weisen einen Befestigungsteil auf, der an einem Längsträger, der entlang der bewegten Förderfläche ortsfest angeordnet ist, mittels Bolzen und Langlöcher befestigt werden kann und in seinem Oberteil mit Löchern versehen ist, durch welche ein Tragbolzen für die Seitenführung in seiner Längsrichtung verschiebbar und festsetzbar angeordnet ist.

Der Erfindung gemäss wird vorgesehen, dass die Stütze mit einer Drehverbindung versehen wird, die eine Verdrehung eines mit der Seitenführung zu verbindenden Teil der Stütze hinsichtlich des Befestigungsteiles erlaubt.

Bei einer beispielsweisen Ausführungsform der Erfindung ist vorgesehen, dass der Befestigungsteil geteilt ist in zwei Teile, die mittels einer festsetzbaren Drehverbindung mit einander verbunden sind. Vorzugsweise wird diese Drehverbindung dabei von einem vertikalen Schraubbolzen gebildet.

Diese Drehverbindung kann auch benutzt werden, um eine Höheneinstellung der Stütze zu ermöglichen, indem eine oder mehrere Zwischenlagen zwischen den zwei Teilen um den Schraubbolzen angeordnet sind.

Eine weitere vorteilhafte Ausbildung der Erfindung zeichnet sich dadurch aus, dass der Tragbolzen mit einem um eine vertikale Achse drehbaren Verbindungsteil versehen ist, der an der Seitenführung befestigt werden kann.

Obwohl jede dieser beiden Drehverbindungen, das heisst zwischen den Teilen des geteilten Befestigungsteiles und zwischen dem Tragbolzen und der Seitenführung, an sich bereits eine Verbesserung bilden, wird es bevorzugt die beiden Drehverbindungen zu kombinieren, insbesondere im Falle, dass die Seitenführung nur an bestimmten Stellen mit den Tragbolzen verbunden werden kann, z.B. wenn sie mit Befestigungsbohrungen versehen ist. Die beiden Drehverbindungen erlauben dann eine vollständig biegespannungsfreie Verbindung zwischen den Tragbolzen und der Seitenführung.

Die erfindungsgemässe Stütze ist im folgenden an Hand der Zeichnung näher beschrieben.

Es zeigen:
      Fig. 1 eine Seitenansicht einer beispielsweisen
      Ausführungsform der erfindungsgemässen Stütze,
      Fig. 2 eine Vorderansicht der in der Fig. 1 dargestellen Stütze und

Fig. 3 eine Einzelheit einer zweiten Ausführungsform
dieser Stütze.

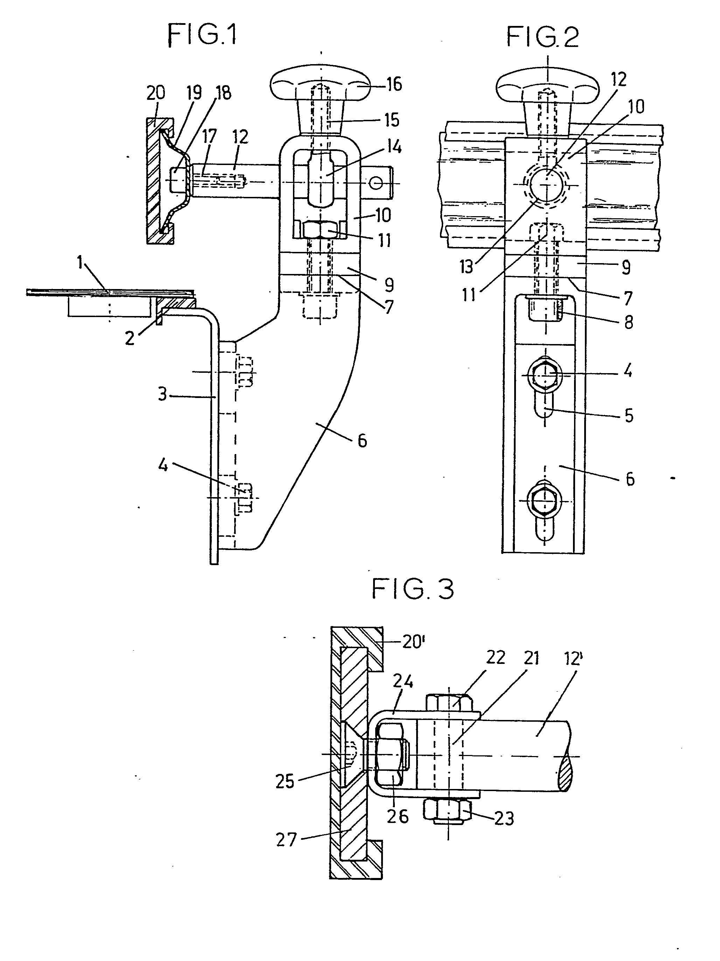

In der Fig. 1 ist eine sich lotrecht zur Zeichnungsebene
bewegende Förderbahn mit 1 bezeichnet, auf deren Oberseite sich die nicht besonders dargestellten Gegenstände,
z.B. Flaschen befinden. Ein Stützrand 2 aus z.B. Kunststoff
ist an einem Längsträger 3 befestigt. Mittels Schraubbolzen
4 und Langlöcher 5 ist der Unterteil 6 der gezeigten Stütze
befestigt. Der Unterteil 6 hat eine waagerechte Tragfläche 7,
durch welche ein Schraubbolzen 8 geführt ist. Ein Zwischenstück 9 trägt den Oberteil 10, wobei Unterteil 6, Zwischenstück 9 und Oberteil 10 mit einer Mutter 11 festgesetzt
werden können. Ein Tragbolzen 12, der vorzugsweise doch
nicht notwendigerweise einen kreisrunden Querschnitt hat,
ist durch Löcher 13 gesteckt und ist mittels einer Öse 14,
die mit einem Schraubteil 15 versehen ist, der mit einem
Schraubdrehknopf 16 zusammenarbeitet, festgeklemmt.

An seinem linken Ende ist der Tragbolzen 12 mit einem
Gewindeloch 17 versehen, in das eine Schraube 18 eingeschraubt
werden kann. Diese Schraube 18 ist durch ein Metallprofil
19 geführt und dieses Profil 19 trägt die eigentliche
Seitenführung 20 von z.B. Kunststoff.

Die Fig. 3 zeigt das linke Ende eines Tragbolzens 12',
der mit einem vertikalen Loch 21 versehen ist, wodurch ein
Schraubbolzen 22 steckt, der mittels einer Mutter 23 einen
Bügel 24 festhält, der mit einer Schraube 25 und einer
Mutter 26 eine Tragplatte 27 trägt, auf die die Seitenführung 20' geklemmt worden ist.

Bei der Ausführungsform der Fig. 1 und 2 ist es möglich,
dass die Endfläche des Tragbolzens 12 und die Fläche des
Profils 19 nicht vollständig in derselben Ebene liegen,
so dass eine geringfügige Biegung des Profils 19 beim
Anziehen der Schraube 18 eintreten kann. Dieses ist im
Allgemeinen erlaubt und verhindert eine richtige Einstellung
der Seitenführung nicht. Im Falle, dass das Profil 19 steif

0048524

ist oder aber aus steifen Platten 27 zusammengesetzt ist, so ist die Lösung der Fig. 3 zu bevorzugen.

0048524

Ansprüche:

1. Stütze für eine Seitenführung (20/20') einer Fördereinrichtung (1), bestehend aus einem Befestigungsteil (6) und
einem in seiner Längsrichtung verschiebbaren und festsetzbaren mit der Seitenführung zu verbindenden Tragbolzen (12),
dadurch gekennzeichnet,
dass die Stütze mit einer Drehverbundung (8) versehen ist,
die eine Verdrehung eines den Tragbolzen (12) tragenden
Teil (10) hinsichtlich dem Befestigungsteil (6) erlaubt.

2. Stütze nach Anspruch 1,
dadurch gekennzeichnet,
dass der Befestigungsteil (6) geteilt ist in zwei Teile
(6, 10), die mittels einer festsetzbaren Drehverbindung
(8) mit einander verbunden sind.

3. Stütze nach Anspruch 2,
dadruch gekennzeichnet,
dass die Drehverbindung von einem vertikalen Schraubbolzen
(8) gebildet wird.

4. Stütze nach Anspruch 3,
gekennzeichnet durch ,
ein Zwischenstück (9) zwischen den zwei Teilen (6, 10).

5. Stütze nach einem oder mehreren der Ansprüche 1 bis 4,
dadurch gekennzeichnet,
dass der Tragbolzen (8) mit einem um eine vertikale Achse
drehbaren Verbindungsteil (24) versehen ist, der an der
Seitenführung (20, 20') zu befestigen ist.

FIG.1

FIG.2

FIG.3

| | Europäisches Patentamt | **EUROPÄISCHER RECHERCHENBERICHT** | **0048524** Nummer der Anmeldung EP 81201046.0 |
|---|---|---|---|

## EINSCHLÄGIGE DOKUMENTE

| Kategorie | Kennzeichnung des Dokuments mit Angabe. soweit erforderlich. der maßgeblichen Teile | betrifft Anspruch | KLASSIFIKATION DER ANMELDUNG (Int. Cl.) |
|---|---|---|---|
| A | <u>US - A - 4 225 035</u> (MOHNEY)<br><br>* Fig. 4,8; Spalte 1, Zeilen 45-51 *<br><br>---- | 1 | B 65 G 21/20 |

RECHERCHIERTE SACHGEBIETE (Int. Cl.)

B 65 G

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angefuhrtes Dokument

L: aus andern Grunden angefuhrtes Dokument

&: Mitglied der gleichen Patentfamilie. übereinstimmendes Dokument

| X | Der vorliegende Recherchenbericht wurde fur alle Patentanspruche erstellt |
|---|---|

| Recherchenort | Abschlußdatum der Recherche | Prufer |
|---|---|---|
| WIEN | 07-12-1981 | PISSENBERGER |

EPA form 1503.1  06.78